# EUROPEAN PATENT APPLICATION

(11) **EP 3 416 063 A1**
(43) Date of publication of application: **19.12.2018**
(21) Application number: 17208698.5
(22) Date of filing: 19.12.2017
(51) Int. Cl.: G06F 17/27, G06Q 50/18

(54) **CLAIM STRUCTURE ORGANIZING APPARATUS**

(30) Priority: 14.06.2017 TW 106119730
(71) Applicant: Integral Search International Limited, Taipei City 11063 (TW)
(72) Inventor: TSAI, Hong-Shin, 11063 Taipei City (TW)
(74) Representative: Morris, Jonathan Paul

(57) **Abstract**

The invention provides a claim structure organizing apparatus including: an element noun grabbing device, a complement determining device and an organizing device. The element noun grabbing device is configured to grab an element noun from a claim. The complement determining device is configured to gather a complement which corresponds to the subject element. The organizing device is configured to organize and display the element noun, the object element noun and the complement according to an organizing rule composed by order relationships among the element noun, the complement and a plurality of organization identifying words. By structurally organizing the claim in order to highlight their content structure, it is beneficial for a patent professional to be able to quickly review patent contents, and to apply to a searching operation.

## Description

### FIELD OF THE INVENTION

The present invention relates to a patent claim organizing apparatus, and more particularly relates to a claim structure organizing apparatus.

### BACKGROUND OF THE INVENTION

A patent claim is a technical definition of a subject matter, including element nouns and interrelationship definitions among the element nouns. Therefore when the amount of the element nouns and the amount of the interrelationship definitions are complicated and diversified, it causes for a general public reader or even for a patent professional that the patent claims cannot be easily read or understood.

In addition, although a claim is drafted by following a specific rule, different writers could draft the patent claims in various different ways under the specific rule. Facing to such variety of claims, a general public reader or even a patent professional are not certain to easily understand each definition in detail, especially in relation to the element nouns and the interrelationship definitions among/between the element nouns. In other words, it is an issue to enhance the efficiency of claim-reading for a patent reader.

The inventor of the present invention discovers that re-organizing patent claims as an structured patent claims can be a solution to solve the issue. The re-organizing patent claim can help the patent readers including patent professionals and the general public readers quickly and correctly understand the detailed definition of patent claims. Specifically, the re-organizing patent claim should have an easy-reading format that re-arranges the positions of the element nouns, the complements and the object element nouns to provide a clear expressing structure of the definition such that a patent reader can easily understand the meaning of the patent claim. The inventor of the present invention discovers that the above can be achieved by applying a hardware apparatus which operates an advanced words arrangement. The advanced words arrangement is with logic extensibility that ensures the enormous amount of patent claims to be handled while the amount of patent claims is exploding.

### SUMMARY OF THE INVENTION

Therefore, an objective of the present invention is to provide a claim structure organizing apparatus, which determines the positions of the element noun, the object element noun and the complement according to an organizing rule so as to structurally organize word definitions of patent claim. In other words, the positions of the element noun, the object element noun and the complement are re-arranged to provide a patent claim with an easy-reading format whose structural meaning is expressed by properly separating the definitions, gathering the definitions and matching the definitions. Accordingly, the present invention provides a structurally organized patent claims to allow a patent reader to read the patent claims easier and quicker.

In order to achieve the above, the present invention provides a claim structure organizing apparatus which structurally organizes a claim structure, the claim structure organizing apparatus comprising: an element noun grabbing device which is configured to grab an element noun from the claim according to a part-of-speech of word and a separating rule table; a complement determining device which is configured to gather a complement from the claim, the complement being a combination of a relationship definition and an object element noun, the object element noun being the element noun following the relationship definition; and an organizing device which is configured to obtain an organized content, the organized content is obtained by determining the positions of the element noun, the object element noun and the complement according to an organizing rule composed by order relationships among the element noun, the object element noun, the relationship definition and a plurality of organization identifying words, and/or displays the organized content, wherein the organization identifying words are "and" and ",".

In one embodiment of the present invention, a claim structure organizing apparatus is provided that the element noun is further classified as a non-antecedent element noun and an antecedent element noun, and the organizing device obtains an organized content by organizing the element noun, the object element noun and the complement according to the organizing rule formed by order relationships among the non-antecedent element noun, the antecedent element noun, the complement and the plurality of organization identifying words, and/or the organized content is displayed.

In one embodiment of the present invention, a claim structure organizing apparatus is provided that the element noun, the object element noun and the complement are organized to determine separating positions and/or gathering relationships and/or subordinating relationships and/or matching relationships among the element noun, the object element noun and the complement, and/or the organized content is displayed.

In one embodiment of the present invention, a claim structure organizing apparatus is provided that the organizing device includes a middle section determining sub-device, the middle section determining sub-device determining a middle section as a main element middle section or a wherein middle section, and/or the organized content is displayed.

In one embodiment of the present invention, a claim structure organizing apparatus is provided that the complement determining device further includes a verb complement determining sub-device and a non-verb complement determining sub-device, the verb complement determining sub-device determining the complement whose relationship definition is with a verb form as a verb complement definition, and the non-verb complement determining sub-device determining the complement whose relationship definition is not with a verb form as a non-verb complement definition.

In one embodiment of the present invention, a claim structure organizing apparatus is provided that the organizing device includes an "and" segment determining sub-device which obtains a small segment of "and" organized content by gathering a portion of sequential words having a plurality of element nouns or object element nouns in connection to the organization identifying word of "and", and/or the organized content is displayed.

In one embodiment of the present invention, a claim structure organizing apparatus is provided that once the small segment of "and" organized content is determined, the small segment of "and" organized content will be an inseparable small segment which is gathered together without being affected by any other organizing rules, and/or the organized content is displayed.

In one embodiment of the present invention, a claim structure organizing apparatus is provided that the organizing rule obtains an organized content of small segments by separating the element noun, the object element noun and the complement from each other according to the located position of the plurality of organization identifying words relative to the element noun, the object element noun and the complement and/or the organized content is displayed.

In one embodiment of the present invention, a claim structure organizing apparatus is provided that the organizing rule includes a matching determining sub-rule, the matching determining sub-rule determining an organized content of the matching relationships among the element noun, the object element noun and the complement according to the organization identifying word of "and" , and/or the organized content is displayed.

In one embodiment of the present invention, a claim structure organizing apparatus is provided that the organizing rule including a subordinating determining sub-rule, the subordinating determining sub-rule determines, according to whether the relationship definition is defined with an subordinating definition word, an organized content of the subordinating relationships among the element noun, the object element noun and the complement which are defined after the subordinating definition word, and/or the organized content is displayed.

In one embodiment of the present invention, a claim structure organizing apparatus is provided that the organizing device includes a subordinating marking component which is ignited when the relationship definition is found with a subordinating definition word thereby obtaining an organized content of subordinating relationships among the element noun, the object element noun and the complement which are defined after the subordinating definition word when the organization identifying word of "and" is obtained, and/or the organized content is displayed.

The claim structure organizing apparatus of the present invention possesses the effects mentioned below. The positions of the element noun, the object element noun and the complement are re-arranged according to an organizing rule composed by order relationships among the element noun, the object element noun, the relationship definition and a plurality of organization identifying words. In other words, the organizing rule is formed by symbols of the element noun, the object element noun, the relationship definition and a plurality of organization identifying words, so the organizing rule is expandable while the amount of patent claims becomes enormous. Moreover, the positions of the element noun, the object element noun, the relationship definition and a plurality of organization identifying words are simply determined by using the operation of separating, gathering and matching the definitions of the patent claims. Therefore, the operations are not complicated. Furthermore, after the positions of the element noun, the object element noun, the relationship definition and a plurality of organization identifying words are determined to obtain an organized result, the organized result can be displayed to the patent readers or can be stored in the database.

### BRIEF DESCRIPTION OF THE DRAWINGS

Fig. 1 is a schematic diagram of a claim structure organizing apparatus according to one embodiment of the present invention.
Fig. 2 is a separating rule table of a part-of-speech of word built according to one embodiment of the present invention.
Fig. 3 is a part-of-speech database of a part-of-speech of word built according to one embodiment of the present invention.
Fig. 4 is a schematic diagram of a claim with element nouns being grabbed according to one embodiment of the present invention.
Fig. 5 is a schematic diagram illustrating the formation of a complement according to one embodiment of the present invention.
Fig. 6 is a schematic diagram illustrating a verb complement according to one embodiment of the present invention.
Fig. 7 is a schematic diagram illustrating a non-verb complement according to one embodiment of the present invention.
Fig. 8 is a schematic diagram illustrating a middle section determining sub-device according to one embodiment of the present invention.
Fig. 9a is a schematic diagram illustrating a first separating/gathering sub-rule according to one embodiment of the present invention.
Fig. 9b is a schematic diagram illustrating an example sentence corresponding to Fig. 9a according to one embodiment of the present invention.
Fig. 10a is a schematic diagram illustrating a second separating/gathering sub-rule according to one embodiment of the present invention.
Fig. 10b is a schematic diagram illustrating an example sentence corresponding to Fig. 10a according to one embodiment of the present invention.
Fig. 11a is a schematic diagram illustrating a matching determining sub-rule according to one embodiment of the present invention.
Fig. 11b is a schematic diagram illustrating an example sentence corresponding to Fig. 11a according to one embodiment of the present invention.
Fig. 12a is a schematic diagram illustrating a subordinating determining sub-rule according to one embodiment of the present invention.
Fig. 12b is a schematic diagram illustrating an example sentence corresponding to Fig. 12a according to one embodiment of the present invention.
Fig. 12c is another schematic diagram illustrating an example sentence corresponding to Fig. 12a according to one embodiment of the present invention.
Fig. 12d is a schematic diagram illustrating another example sentence corresponding to Fig. 12a according to one embodiment of the present invention.

### DETAILED DESCRIPTION OF THE PREFERRED EMBODIMENTS

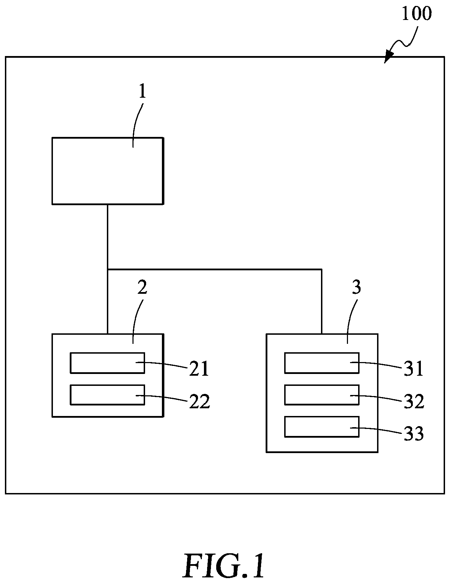

With reference to Figs. 1 to 14, the embodiments of the present invention are described. The description does not limit the scope of the embodiments but is one of the embodiments of the present invention.

In Fig. 1, a claim structure organizing apparatus 1 according to one embodiment of the present invention structurally organizes a claim structure of a claim by determining the positions of the element noun, the object element noun and the complement are re-arranged according to an organizing rule. In order to achieve the goal, the element noun, the object element noun and the complement should be grabbed. The claim structure organizing apparatus 1 includes an element noun grabbing device 11, a complement determining device 12 and an organizing device 13. More specifically, the claim structure organizing apparatus 1 in one embodiment of the present invention can be embedded in a computer to execute its corresponding goals and effects. In the present invention, the element noun grabbing device 11, the complement determining device 12 and the organizing device 13 of the claim structure organizing apparatus 1 are computer hardware which can be configured as sharing the same processing unit and the same memory. Alternatively, the element noun grabbing device 11, the complement determining device 12 and the organizing device 13 of the claim structure organizing apparatus 1 can be allocated with their own processing units and their own memory.

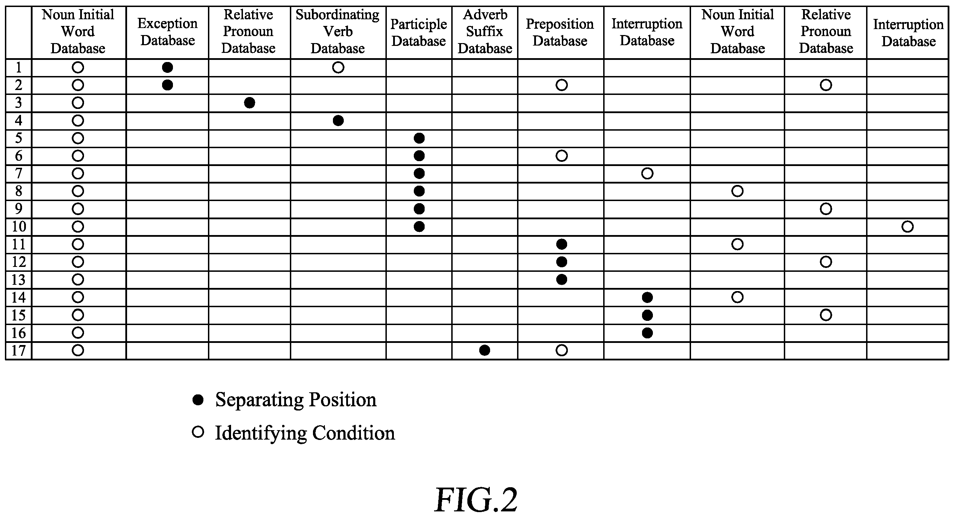

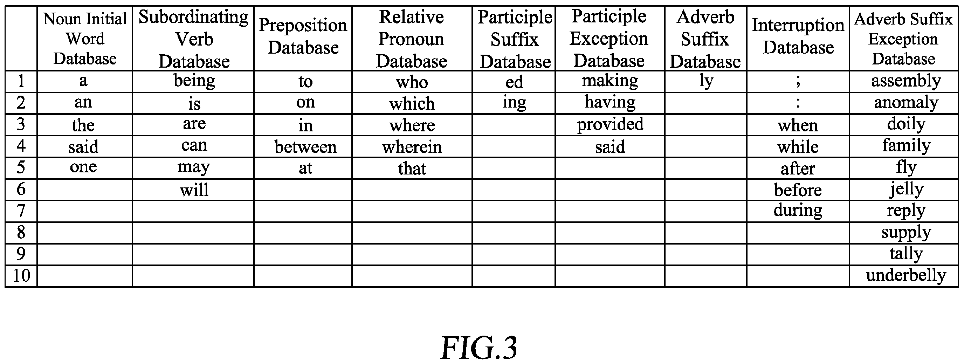

As shown in Fig. 2 and Fig. 3, the element noun grabbing device 11 enables a central processer of the claim structure organizing apparatus 1, not shown, to grab an element noun from the claim according to a part-of-speech of word, wherein the part-of-speech of word is determined according to a separating rule table as shown in Fig. 2 and a part-of-speech database as shown in Fig. 3. The separating rule table is a data stored in the memory. The element noun is then stored in any memory of the claim structure organizing apparatus 1. The element noun grabbing device 11 is configured to grab the element noun by determining a noun initial word of the claim as a start position of the element noun according to the part-of-speech of word, and by determining a final separating position of the element noun as an end position of the element noun according to the part-of-speech of word. The above determination of the noun initial word of the claim and determination of the final separating position of the element noun is performed by the central processor, not shown. The detail of the element noun grabbing device 11 that grabs the element noun can be found in US patent application No. 15/169,581. But the present invention is not limited to this. The element noun can be grabbed by a processing unit of the element noun grabbing device 11 and can be stored in a memory of the element noun grabbing device 11, but is not limited to this.

The part-of-speech table is a plurality of databases obtained according to the part-of-speech of a word. In Fig. 3, the plurality of databases include, for example, a noun initial word database, a subordinating verb database, a preposition database, a relative pronoun database, a participle suffix database, an adverb suffix database and an exception database. The part-of-speech identification performed by the central processor, not shown, is with advantage that only very few words or even only some letters of a single word are required to be identified, whereas the part-of-speech identification is performed by applying several relatively limited number of words or partial form defined in the noun initial word database ("a", "an", "the", "said", "one" and "each"), the subordinating verb database ("being", "is", "are", "can", "may", "will", "comprises", "comprising", "includes", "including", "has", "have" and "having"), the preposition database ("to", "from", "in", "on", "with", "between", "at", etc.), the relative pronoun database ("who", "which", "that", "wherein", "where", etc.), a participle suffix database ("∼ing" and "∼ed")and an adverb suffix database ("∼ly"), and also a participle exception database ("making", "having", "provided" and "said") and adverb suffix exception database ("assembly", "anomaly", "doily", "family", "fly", "jelly", "reply", "supply", "tally" and "underbelly"). In other words, a part-of-speech identification is performed by reading a word of patent's claim so as to identify to which database the read word belongs, and thereafter the element noun is concluded by determining a start position of an element noun and an end position of the element noun, i.e., separating position, according to a separating rule table (Fig. 2). The element noun is defined as a noun in the claim. The above part-of-speech identification is performed by the central processor of the claim structure organizing apparatus 1, not shown. The identification result is then stored in any memory of the claim structure organizing apparatus of the present invention. But the present invention is not limited to this. The part-of-speech identification can be also performed by a processing unit of the element noun grabbing device 11 and the result is stored in a memory of the element noun grabbing device 11, but is not limited to this.

The follows is an example of a sentence in English.
"a circuit board provided with edges extending in a longitudinal direction of said circuit board"

The below explains how the above sentence is read by referring to the separating rule table of Fig. 2 so as to describe how the element noun is grabbed.

The below operation can be performed by a processor of the element noun grabbing device 11, and the determination result can be stored in the memory of the element noun grabbing device 11. But the present invention is not limited to this. The reading operation of the element noun grabbing device 11 can be performed by a central processor of the claim structure organizing apparatus 1, and the read definition content can be stored in the memory of the claim structure organizing apparatus 1.

When a sentence reading starts from the beginning of the sentence to read [a] as follows: "[a] circuit board provided with edges extending in a longitudinal direction of said circuit board;" where a word bracketed within "[" and "]" is the word being read. The word [a] is recognized as belonging to "noun initial word database". Therefore, the marks of "○" in the second column of Fig. 2 are included in the following processes. Then, the sentence reading goes ahead and read [circuit] as follows: "a [circuit] board provided with edges extending in a longitudinal direction of said circuit board;" where "circuit" is recognized as not belonging to any database. Therefore, the sentence reading goes ahead and read [board] as follows: "a circuit [board] provided with edges extending in a longitudinal direction of said circuit board;" where "board" is also recognized as not belonging to any database. Then the sentence reading goes ahead and read [provided] as follows: "a circuit board [provided] with edges extending in a longitudinal direction of said circuit board;" where "provided" is recognized as belonging to a participle database. The recognition drives the processes to be one of process with numbers from 5 to 10 as indicated by "●" in Fig. 2. The marks "●" indicates as a temporary separating position. The temporary separating position is a temporary position which will be determined as a separating position when the word following the temporary separating position is determined as a determination word as marked with "○". Then the sentence reading goes ahead and read [with] as follows: "a circuit board provided [with] edges extending in a longitudinal direction of said circuit board;" where "with" is recognized as belonging to a preposition database such that, according to the separating rule table, the process of number 6 is selected by determining the recognized word "with" as a determination word and the temporary separating word "provided" is then determined as a separating word to determine an element noun. Accordingly, the element noun is obtained by grabbing words from the noun initial word to the word neighboring to and before the separating word. In the example, the element noun "a circuit board" is grabbed. The sequential reading of claim is performed by a processing unit of the element noun grabbing device 1 and the result is stored in a memory of the element noun grabbing device 1, but is not limited to this. The sequential reading of claim can be performed by a central processing unit or can be stored in any memory of the claim structure organizing apparatus of the present invention.

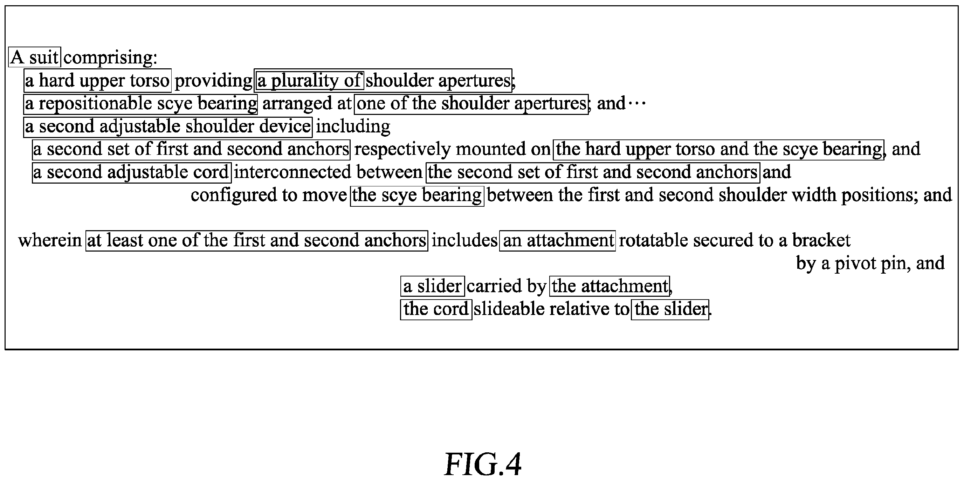

Fig. 4 is a diagram showing element nouns grabbed in a claim. The grabbed element nouns are marked by being positioned in the blocks. More specifically, the element nouns are grabbed from the claim according to the part-of-speech table and the separating rule table, including element nouns of "a suit", "a hard upper torso", "a plurality of shoulder apertures", "a repositionable scye bearing", "one of the shoulder apertures", "a second adjustable shoulder apparatus", "a second set of first and second anchors", "the hard upper torso and the scye bearing", "a second adjustable cord", "the second set of first and second anchors", "the scye bearing", "at least one of the first and second anchors", "an attachment", "a slider", "the attachment", "the cord" and "the slider" in a claim. After the element nouns have been grabbed, a definition content between two neighboring element nouns is defined as an interrelationship definition.

Basically, the central processor, not shown, performs a reading of claim to obtain the content of the claim. The content of the claim are then stored in the memory of the claim structure organizing apparatus 1. The stored content is then fetched by the processor for the further operation. The operated result is stored back to the memory.

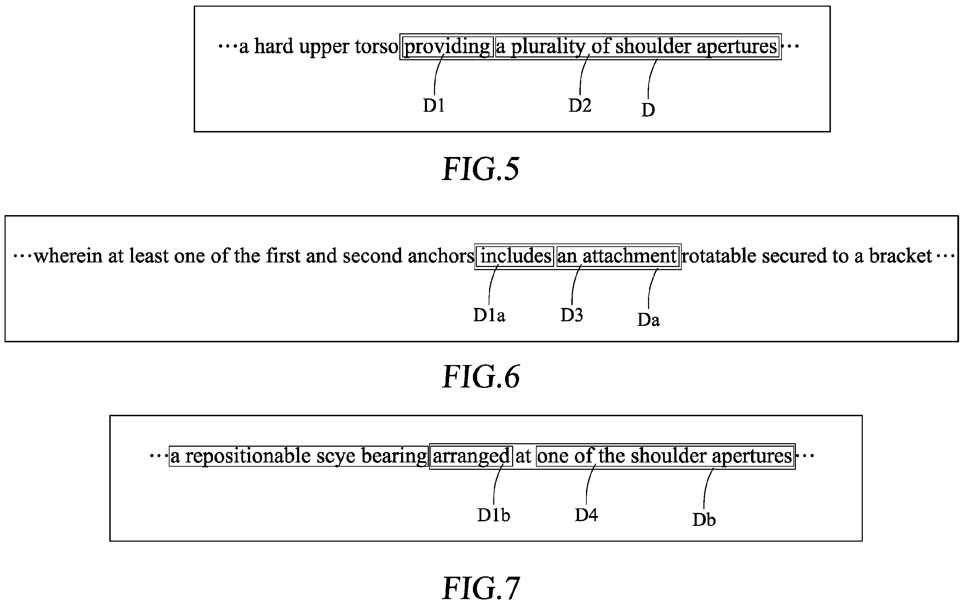

After the element nouns have been determined, a complement determining device 12 provided in the present invention forms a complement by gathering the relationship definition, i.e., a definition content located between two neighboring element nouns, and the element noun following the relationship definition. Referring to Fig. 4 and Fig. 5 together, in other words, after "a hard upper torso" and "a plurality of shoulder apertures" have been determined, the complement determining device 12 enables the processor, not shown, firstly to grab a definition content "providing" between two neighboring element nouns "a hard upper torso" and "a plurality of shoulder apertures" as a relationship definition, and gather the relationship definition "providing" with the element noun "a plurality of shoulder aperture" which follows the relationship definition "providing" to form a complement definition D, i.e., "providing a plurality of shoulder apertures". In one embodiment of the present invention, the complement determining device 12 enables the processor to determine an element noun, which follows a relationship definition, as an object element noun by ignoring a forced separating word, i.e., a punctuation mark, , and then gather the relationship definition and the object element noun to form the complement definition. For example, the complement definition D includes a combination of a relationship definition D1 "providing" and an object element noun D2 "a plurality of shoulder apertures". More specifically, the object element noun D2 "a plurality of shoulder apertures" is an element noun following the relationship definition D1. In principle, one relationship definition is always followed by an object element noun. The exception thereof is the relationship definition beginning by "in which" or is the complement definition of an adjective form, in which the object element noun may be absent. The element noun is further classified as a non-antecedent element noun, i.e., an element noun beginning by "a" or "an", and an antecedent element noun, i.e., an element noun beginning by "the" or "said". The organizing device enables the processor, not shown, to organize the element noun and the complement according to an organizing rule formed by order relationships among the non-antecedent element noun, the antecedent element noun, the complement and the plurality of organization identifying words.

The above operation can be performed by a processor of the complement determining device 12, and the gathered complement can be stored in the memory of the complement determining device 12. But the present invention is not limited to this. The determining operation of the complement determining device 12 can be performed by a central processor of the claim structure organizing apparatus 1, and the grabbed definition description content can be stored in the memory of the claim structure organizing apparatus 1.

Furthermore, the complement determining device 12 further includes a verb complement determining sub-device 121 and a non-verb complement determining sub-device 122, as shown in Fig. 1. In one embodiment of the present invention, the verb complement determining sub-device 121 enables the processor, not shown, to determine a complement definition of a verb form relationship definition as a verb complement definition. In other words, a relationship definition in the verb complement is a verb. More specifically, referring to Fig. 6, in the above exemplary claim sentence to be read, "includes an attachment..." is the verb complement Da, and the "includes" in the sentence is a verb form relationship definition D1a in the verb complement. The "an attachment" following the "includes" in the sentence is an object element noun D3, which is a non-antecedent element noun and also an element noun.

The above operation can be performed by a processor of the verb complement determining sub-device 121, and the determined complement can be stored in the memory of the verb complement determining sub-device 121. But the present invention is not limited to this. The determining operation of the verb complement determining sub-device 121 can be performed by a central processor of the claim structure organizing apparatus 1, and the determined definition description content can be stored in the memory of the claim structure organizing apparatus 1.

In one embodiment of the present invention, the non-verb complement determining sub-device 122 enables the processor, not shown, to determine a complement not having a verb form relationship definition as a non-verb complement definition. In other words, the complement of a non-verb form relationship definition has its relationship definition in form other than a verb form. More specifically, the non-verb form relationship definition can be a present participle or a pass participle. In the example sentence illustrated in Fig. 7 of the present invention, "...arranged at one of the shoulder apertures..." which follows the element noun "a repositionable scye bearing" is the non-verb complement Db, in which "arranged" is a participle and is the relationship definition in non-verb form D1b. Furthermore, the element noun of "one of the shoulder apertures" is an object element noun D4 following "arranged at".

The above operation can be performed by a processor of the non-verb complement determining sub-device 122, and the determined complement can be stored in the memory of the non-verb complement determining sub-device 122. But the present invention is not limited to this. The determining operation of the non-verb complement determining sub-device 122 can be performed by a central processor of the claim structure organizing apparatus 1, and the determined definition description content can be stored in the memory of the claim structure organizing apparatus 1.

According to the above, the element nouns and the complements have been determined. Now, the organizing device 13 of the present invention starts to organize the claim. More specifically, the organizing device 13 enables the processer, not shown, to organize (1) the element noun including the object element noun and (2) the complement formed by the relationship definition and the object element noun, according to an organizing rule composed by order relationships among (1) the element noun including the object element noun, (2) the complement and (3) an organization identifying word. In detail, the organizing rule is formulated with arrangement order relationships among (1) an element noun including the object element noun, (2) the complement and (3) an organization identifying word so as to enable the organizing device 13 to determine the organizing relationships among (1) an element noun, (2) a complement and (3) an organization identifying words according to the organizing rule. The organizing relationships include operations of separating, gathering, sectioning and matching the definitions. And then, the organizing device 13 enables the processer, not shown, to display the separated, gathered, sectioned and matched definitions in the organized content after a claim sentence is organized. The organization identifying words include "and" and ",". Moreover, in another embodiment, the organizing device 13 can further enables the processer, not shown, to mark the appearance of a subordinating property relationship definition, for example, the subordinating property relationship definition including "comprising", "including", "having" and "with". By means of marking the subordinating property relationship definition, when an organization identifying word including "and" or ",", is read by the processor, not shown, the element noun, i.e. the subordinating element belonging to the subordinating property relationship definition, following the organization identifying word is recognized as being subordinated to the relationship definition such that the subordinating element is grabbed.

The above operation can be performed by a processor of the organizing device 13, and the organized claim can be stored in the memory of the organizing device 13. But the present invention is not limited to this. The organizing operation of the organizing device 13 can be performed by a central processor of the claim structure organizing apparatus 1, and the organized claim can be stored in the memory of the claim structure organizing apparatus 1.

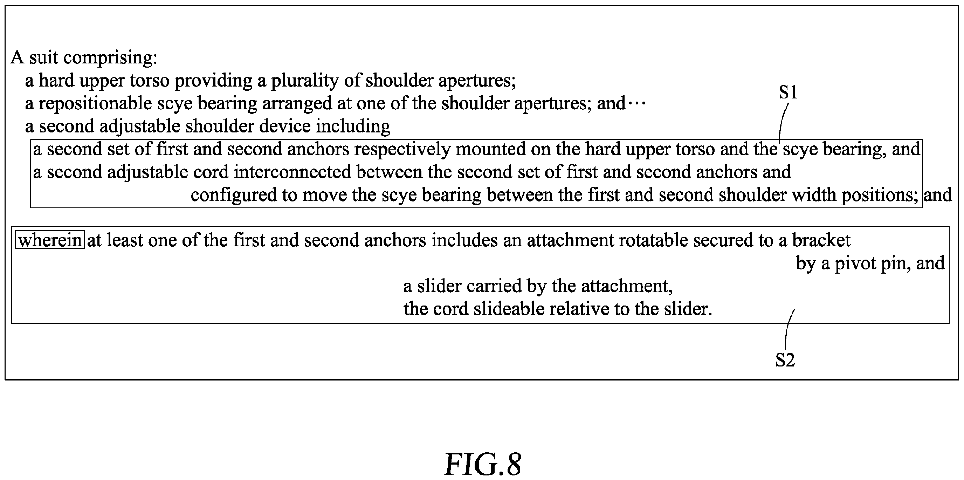

As illustrated in Fig. 1, the organizing device 13 provided in the present invention includes a middle section determining sub-device 131, an "and" segment determining sub-device 132 and a subordinating marking component 133, wherein the middle section determining sub-device 131 enables the processer, not shown, to determine a middle section of the claim as "a main element middle section" or "a wherein middle section". More specifically, when a claim sentence is started with an element noun, the middle section determining sub-device 131 defines said middle section as "a main element middle section". And when a claim sentence is started with "wherein", the middle section determining sub-device 131 defines said middle section as "a wherein middle section". Referring to Fig. 8, the present invention determines the main element middle section S1 and the wherein middle section S2 in the illustrated example claim sentence and/or displays the main element middle section S1 and the wherein middle section S2 of the organized content. There is no "wherein" at the beginning of the main element middle section S 1.

The above operation can be performed by a processor of the middle section determining sub-device 131, and the determined middle section can be stored in the memory of the middle section determining sub-device 131. But the present invention is not limited to this. The determining operation of the middle section determining sub-device 131 can be performed by a central processor of the claim structure organizing apparatus 1, and the organized claim can be stored in the memory of the claim structure organizing apparatus 1.

In detail, the organizing rule of the present invention includes a first separating/gathering sub-rule, a second separating/gathering sub-rule, a matching determining sub-rule and a subordinating determining sub-rule, but is not limited thereto, and the organizing rule of the present invention can include other sub-rules related to "and" and ",". Further examples of the organizing rule are discussed as follows.

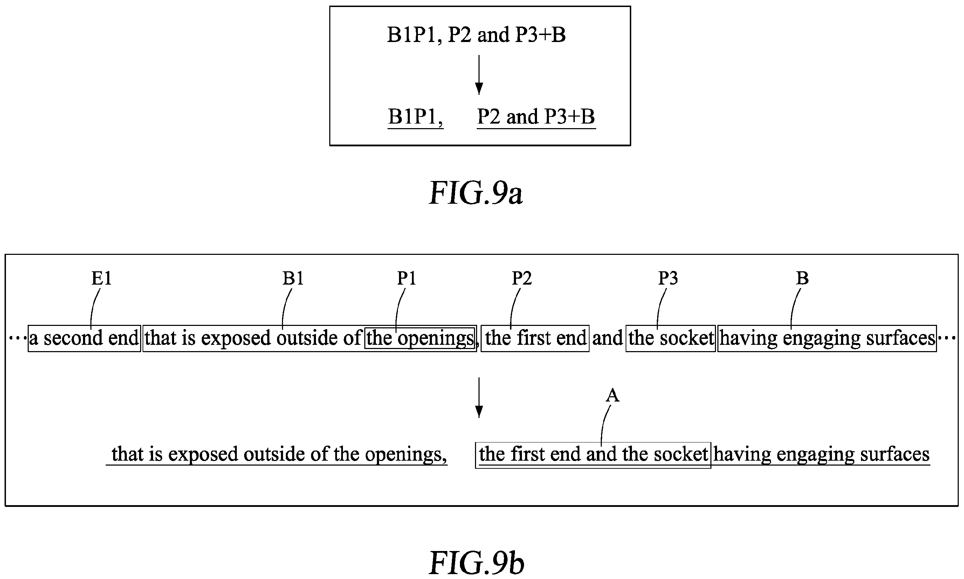

The first separating/gathering sub-rule determines a plurality of element nouns (or object element nouns) as one inseparable group according to an order relationship among the element noun(or object element noun), the complement and the organization identifying word. The first separating/gathering sub-rule of the present invention can be easily understood by means of structural symbols as shown in Fig. 9a together with a partial content of a claim corresponding to the structural symbols for clearer explanation. In Fig. 9a, the organization identifying word "," is located after an element noun P1 belonging to a complement B1, meanwhile the other two element nouns P2 and P3 are located after the organization identifying word ",", and there is the organization identifying word "and" between the two element nouns P2 and P3, and a complement B follows the element noun P3. Therefore, in the example formed by the element nouns, the complements and the organization identifying word of Fig 9a, the first separating/gathering sub-rule performs a separating operation between the organization identifying word "," and the element noun P2, and performs a combination for the plurality of element nouns, i.e. P2 and P3, to determine an element noun group. And once the element noun group is determined as an inseparable group, the inseparable group is not influenced by any other following organizing rule such that it will not be separated anymore. The separating definition shown in Fig 9a is illustrated by a blank space, but is not limited thereto. The separating definition can also be performed by a line feed or color-changing. In other words, the element noun P1 and the element noun P2 can be separated by a blank space, or a line feed, or different colors. The follows takes Fig. 9b as an example to explain the first separating/gathering sub-rule of Fig. 9a: "a second end" is a non-antecedent element noun E1, ,"that is exposed outside of the openings," is a complement B1,"the openings" is an object element noun which is an antecedent element noun P1 defined within the complement B1 and is the P1 of B1P1 in Fig. 9a. The element noun P1 "the openings" is followed by the organization identifying word ",". Meanwhile, the element noun P2 "the first end", i.e. an antecedent element noun, which is equivalent to P2 in Fig. 9a, is followed by an organization identifying word "and" and another element noun P3 "the socket", i.e. an antecedent element noun, which is equivalent to P3 in Fig. 9a. The element noun P3 "the socket" is followed by a complement B "having engaging surfaces", which is equivalent to B in Fig. 9a. According to the first separating/gathering sub-rule of Fig. 9a, the organization identifying word "," and the element noun P2 are separated, which means that "," and the element noun P2 "the first end" are separated, and the plurality of element nouns, i.e. the element noun P2 "the first end" and the element noun P3 "the socket", are determined as one element noun group. In other words, the element noun group is an inseparable group, which is not influenced by any other following organizing rule. In one embodiment of the present invention, the "and" segment determining sub-device 32 enables the processor to obtain a small segment of "and", i.e., an inseparable element noun group, by using the first separating/gathering sub-rule to gather a plurality of element nouns (or object element nouns) in connection to the organization identifying word of "and", and/or display the small segment of "and". In other words, in Fig. 9b, "the first end and the socket" is determined as a small segment of "and" A, i.e., inseparable element noun group. The separating definition shown in Fig. 9b is illustrated by a blank space, but is not limited thereto, and the separating definition can also be performed by a line feed or color-changing. The "and" segment is determined by a processing unit of the "and" segment determining sub-device 132 and is stored in a memory of the "and" segment determining sub-device 132, but is not limited to this. The element noun can be grabbed by a central processing unit of the claim structure organizing apparatus 1 or can be stored in any memory of the claim structure organizing apparatus 1 of the present invention.

The above operation can be performed by a processor of the "and" segment determining sub-device 132, and the obtained small segment of "and" can be stored in the memory of the "and" segment determining sub-device 132. But the present invention is not limited to this. The determining operation of the "and" segment determining sub-device 132 can be performed by a central processor of the claim structure organizing apparatus 1, and the obtained small segment of "and" can be stored in the memory of the claim structure organizing apparatus 1.

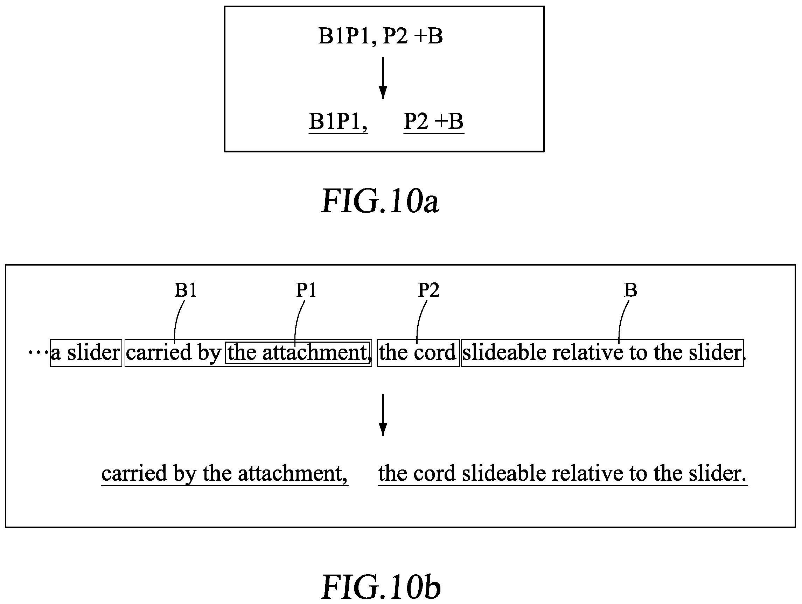

The second separating/gathering sub-rule separates an element noun of a complement and an element noun following the complement according to an order relationship among the element noun (an object element noun), the complement and the organization identifying word as shown in Fig. 10a. Fig. 10a illustrates structural symbols for a better understanding of the second separating/gathering sub-rule in the present invention. Fig. 10b illustrates an example sentence in correspondence with Fig. 10a. In Fig. 10a, the organization identifying word "," is located after an element noun P1 of a complement B1, i.e., the P1 is an object element noun of the complement B1. Meanwhile, the other element noun P2 is located after the organization identifying word ",", and another complement B follows the element noun P2. Therefore, the second separating/gathering sub-rule separates the complement B1 and the element noun P2 according to an order relationship among the element noun, the complement and the organization identifying word ",". In other words, a separating operation is performed between the element noun P1 and the element noun P2. The separating location shown in Fig 10a is illustrated by a blank space, but is not limited to this. The separating can also be performed by a line feed or color-changing. In other words, a separating between the element noun P1 and the element noun P2 can be a blank space, a line feed or color-changing. The second separating/gathering sub-rule of Fig. 10a is explained by referring to Fig. 10b. The element noun "a slider", i.e., a non-antecedent element noun, is followed by a complement B1 "carried by the attachment" which is equivalent to the complement B1 in Fig. 10a and which is with the element noun P1 "the attachment" as an antecedent object element noun of the complement B1. The element noun P1 "the attachment" is followed by the organization identifying word ",". Following the organization identifying word ",", "the cord" is another antecedent element noun P2, followed by the complement B1 "slideable relative to the slider", i.e., the complement B in Fig. 10a. Therefore, the second separating/gathering sub-rule separates "carried by the attachment" from "the cord slideable relative to the slider" according to the position of the organization identifying word "," and an order relationship among the organization identifying word ",", the element noun and the complement. The separating is displayed in the bottom portion of Fig. 10b. In other words, the second separating/gathering sub-rule separates the complement B1 "carried by the attachment" from the element noun P2 "the cord" and the complement B "slideable relative to the slider". The separating definition shown in Fig 10b is illustrated by a blank space, but is not limited to this. The separating can also be performed by a line feed or color-changing. The separating of the element nouns and the interrelationship definitions is performed by a processing unit of the element noun grabbing device 1 and the result is stored in a memory of the element noun grabbing device 1, but is not limited to this. The separating of the element nouns and the interrelationship definitions can be performed by a central processing unit or can be stored in any memory of the claim structure organizing apparatus of the present invention.

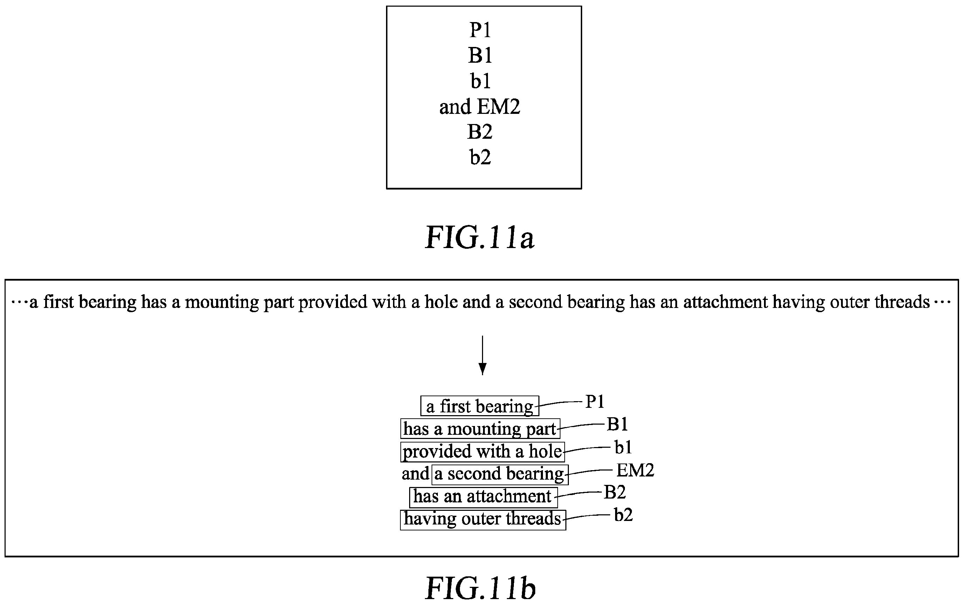

The matching determining sub-rule, when the organization identifying word, i.e., "and" or "," is recognized, determines the matching relationships of the element nouns and the complements following the organization identifying word, i.e., "and" or "," in relation to the element nouns and the complement before the organization identifying word, i.e., "and" or ",". Thereafter the matching relationship is displayed. Moreover, a sub section content, i.e., a content belonging to a sub section beginning with "wherein", "when" or "such that", is further classified as a verb complement, i.e., a complement beginning with a verb root, and a non-verb complement, i.e., a complement beginning with a present participle, past participle, or preposition The matching determining sub-rule defines the verb complement to be processed by the matching operation prior to the subordinate gathering operation which is an operation that enables the element nouns to be subordinated to a subordinating verb. More specifically, the matching determining sub-rule forms a matching relationship where element nouns are matched with each other, and complements are matched with each other. Fig. 11a illustrates the matching determining sub-rule by the expression of structural symbols. In Fig. 11a, the organization identifying word "and" found in the fourth row counting from top to bottom is followed in sequence by an element noun EM2, a verb complement B2, , and a non-verb complement b2, to form a consecutive relationship. Accordingly, the matching determining sub-rule forms another consecutive relationship defined before the organization identifying word "and" in sequence including: an element noun P1, , a verb complement B1, and a non-verb complement b1. The matching determining sub-rule as mentioned above forms the two consecutive relationships to be in a matching relationship and/or displays the matching relationship. Fig. 11b illustrates an example sentence corresponding to the matching determining sub-rule of Fig. 11a where a matching relationship is formed between the element noun P1 "a first bearing" and the element noun EM2 "a second bearing", a matching relationship is formed between verb complement B1 "has a mounting part" and the verb complement B2 "has an attachment", and a matching relationship is formed between the non-verb complement b1 "provided with a hole" and the non-verb complement b2 "having outer threads". It is noted that the matching determining sub-rule is initiated to perform a matching operation when an organization identifying word "and" is read. Moreover, in addition to the matching relationship between "the first..." and "the second...", the matching relationship can be defined as that between "the upper..." and "the lower...", or that between "the left..." and "the right...".

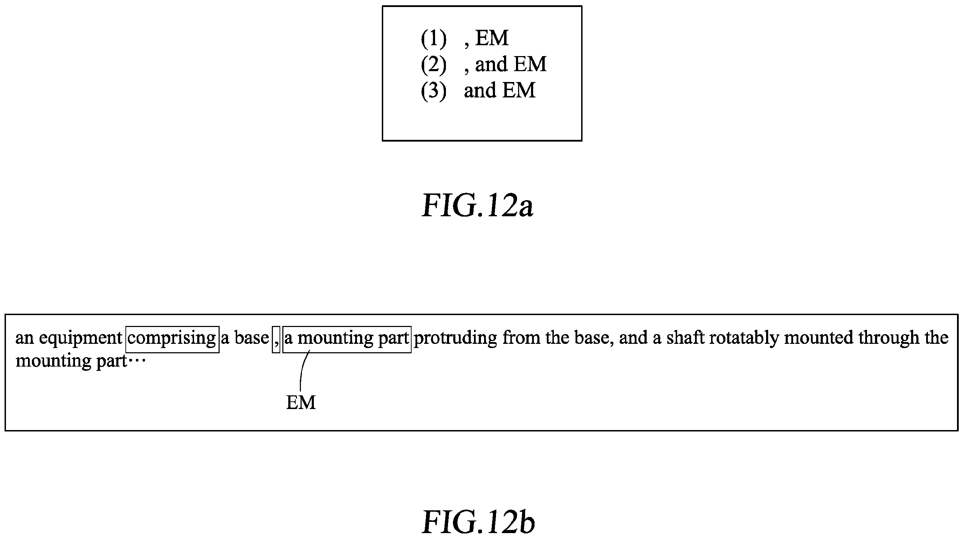

The subordinating determining sub-rule determines subordinating relationship between the element noun (including the object element noun) and the complement following the organization identifying word according to whether the relationship definition is defined with an subordinating definition word, wherein the subordinating definition word includes a subordinating verb and a subordinating participle such as "comprising", "having", "includes", and "including" as shown in Fig. 12a-12d. In one embodiment of the present invention, the subordinating marking component 133 enables the processor to obtain an organized content of subordinating relationships among the element nouns, the object element nouns and the complements according to the subordinating determining sub-rule, and/or display the organized content. More specifically, the subordinating marking component 133 enables the processor to start an subordinating operation when a subordinating verb or a subordinating participle such as "comprising", "having", "includes" and "including" is read in the claims. Thereafter, the subordinating relationships among the element nouns, the object element nouns and the complements which are formed by the subordinating marking component 133 when the organization identifying word is read as shown in Fig. 12a, and/or the organized content is displayed. In Fig. 12a, the present invention further illustrates three types of different location of the organization identifying word in relation to the element noun, where the organization identifying word "," in type (1) is followed by an element noun EM; the organization identifying words "," and "and" in type (2) are followed by an element noun EM; and the organization identifying words "and" in type (3) is followed by an element noun EM.

The above operation can be performed by a processor of the subordinating marking component 133, and the formed subordinating relationships can be stored in the subordinating marking component 133. But the present invention is not limited to this. The determining operation of the subordinating marking component 133 can be performed by a central processor of the claim structure organizing apparatus 1, and the obtained small segment of "and" can be stored in the memory of the claim structure organizing apparatus 1.

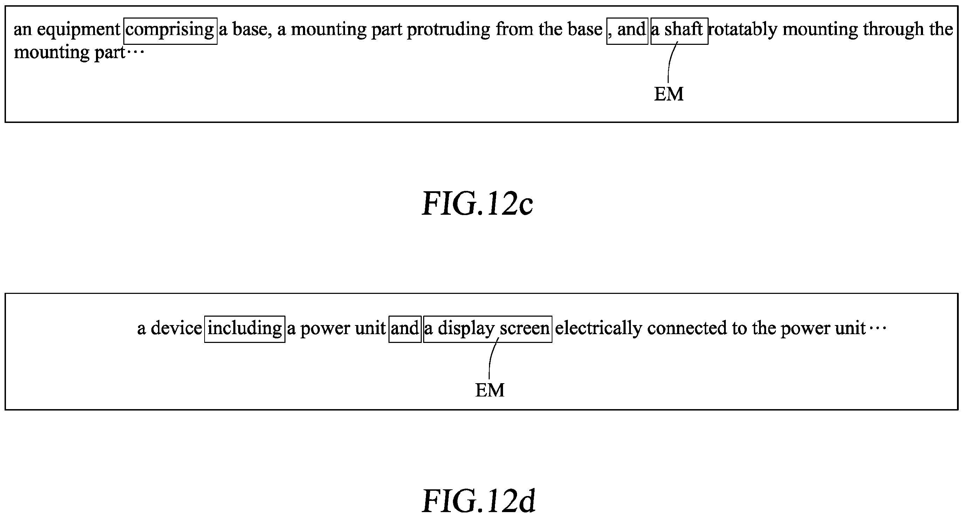

Fig 12b illustrates an example sentence corresponding to the subordinating determining sub-rule of Fig. 12a. In Fig. 12b, after the subordinating verb is recognized, i.e., the subordinating marking component 133 is ignited, the organization identifying word "," followed by the element noun EM, i.e., ", a mounting part" the type (1) is recognized as type (1) as mentioned above such that the element noun EM, i.e., "a mounting part" is taken as belonging to a subordinating verb "comprising". Fig 12c is also an example sentence corresponding to the subordinating determining sub-rule of Fig. 12a, wherein after the subordinating verb is recognized, i.e., the subordinating marking component 133 is ignited, the operation not only takes the element noun EM with type (1) form such as ", a mounting part" as the element noun belonging to the subordinating verb as mentioned above, but also recognizes the element noun with type (2) form, i.e., the organization identifying word ", and" followed by the element noun EM, i.e., ", and a shaft" such that the element noun EM, i.e., " a shaft" is taken as belonging to a subordinating verb "comprising". Fig 12d is another example sentence of the subordinating determining sub-rule of Fig. 12a, wherein the subordinating determining sub-rule recognizes an element noun EM "a display screen" with type (3) form, i.e., the organization identifying word "and" followed by the element noun EM, i.e., "and a display screen" such that the element noun EM, i.e., " a display screen" is taken as belonging to a subordinating verb "comprising".

In other words, the element noun, the object element noun and the complement in the claim sentences are reorganized by the organizing device to identify and display the separating position and/or the gathering relationship and/or the subordinating relationship and/or the matching relationship of the element nouns, the object element nouns and the complements in the claim sentences. Furthermore, the separating position is the position where the element nouns, the object element nouns and the complements separate from each other. Moreover, the gathering relationship is an inseparable group relationship formed by the element nouns, the object element nouns and the complements following the organizing rule. Additionally, the subordinating relationship is a subordinating relationship formed among the element nouns, the object element nouns and the complements determined by the relative position of the organization identifying words in relation to the element noun so as to determine the element noun to be belonging to a subordinating verb or a subordinating participle. In addition, the matching relationship is obtained according to the consecutive relationship of the element nouns, the object element nouns and the complements before and after the organization identifying word.

The above description should be considered only as an explanation of the preferred embodiment of the present invention. A person with ordinary skill in the art can make various modifications to the present invention based on the scope of the claims and the above description. However, those modifications shall fall within the scope of the present invention.

## Claims

1. A claim structure organizing apparatus (1) which structurally organizes a claim structure of a claim, **characterized in that** the claim structure organizing apparatus (1) comprising:
an element noun grabbing device (11) which is configured to grab an element noun from the claim according to a part-of-speech of word and a separating rule table;
a complement determining device (12) which is configured to gather a complement from the claim, the complement being a combination of a relationship definition and an object element noun, the object element noun being the element noun following the relationship definition; and
an organizing device (13) which is configured to obtain an organized content, the organized content is obtained by determining the positions of the element noun, the object element noun and the complement according to an organizing rule composed by order relationships among the element noun, the object element noun, the relationship definition and a plurality of organization identifying words, and/or displays the organized content,
wherein the organization identifying words are "and" and ",".

2. The claim structure organizing apparatus (1) of claim 1, wherein the element noun is further classified as a non-antecedent element noun and an antecedent element noun, and the organizing device (13) obtains an organized content by organizing the element noun, the object element noun and the complement according to the organizing rule formed by order relationships among the non-antecedent element noun, the antecedent element noun, the complement and the plurality of organization identifying words, and/or the organized content is displayed.

3. The claim structure organizing apparatus (1) of claim 1, wherein the element noun, the object element noun and the complement are organized to determine separating positions and/or gathering relationships and/or subordinating relationships and/or matching relationships among the element noun, the object element noun and the complement, and/or the organized content is displayed.

4. The claim structure organizing apparatus (1) of claim 2, wherein the element noun, the object element noun and the complement are organized to determine separating positions and/or gathering relationships and/or subordinating relationships and/or matching relationships among the element noun, the object element noun and the complement, and/or the organized content is displayed.

5. The claim structure organizing apparatus (1) of claim 1, wherein the organizing device (13) includes a middle section determining sub-device (131), the middle section determining sub-device (131) determining a middle section as a main element middle section (S1) or a wherein middle section (S2), and/or the organized content is displayed.

6. The claim structure organizing apparatus (1) of claim 2, wherein the complement determining device (2) further includes a verb complement determining sub-device (121) and a non-verb complement determining sub-device (122), the verb complement determining sub-device (121) determining the complement (D) whose relationship definition (D1a) is with a verb form as a verb complement (Da) definition, and the non-verb complement determining sub-device (122) determining the complement (D) whose relationship definition (D1b) is not with a verb form as a non-verb complement (Db) definition.

7. The claim structure organizing apparatus (1) of claim 1, wherein the organizing device (13) includes an "and" segment determining sub-device (132) which obtains a small segment of "and" (A) organized content by gathering a portion of sequential words having a plurality of element nouns (P2, P3) or object element nouns in connection to the organization identifying word of "and", and/or the organized content is displayed.

8. The claim structure organizing apparatus (1) of claim 5, wherein once the small segment of "and" (A) organized content is determined, the small segment of "and" (A) organized content will be an inseparable small segment which is gathered together without being affected by any other organizing rules, and/or the organized content is displayed.

9. The claim structure organizing apparatus (1) of claim 1, wherein the organizing rule obtains an organized content of small segments by separating the element noun (E1, P1, P2, P3), the object element noun and the complement (B, B1) from each other according to the located position of the plurality of organization identifying words relative to the element noun (E1, P1, P2, P3), the object element noun and the complement (B, B1) and/or the organized content is displayed.

10. The claim structure organizing apparatus (1) of claim 1, wherein the organizing rule includes a matching determining sub-rule, the matching determining sub-rule determining an organized content of the matching relationships among the element noun (EM2), the object element noun and the complement (B1, B2, b1, b2) according to the organization identifying word of "and" , and/or the organized content is displayed.

11. The claim structure organizing apparatus (1) of claim 1, wherein the organizing rule including a subordinating determining sub-rule, the subordinating determining sub-rule determines, according to whether the relationship definition is defined with an subordinating definition word, an organized content of the subordinating relationships among the element noun (EM), the object element noun and the complement which are defined after the subordinating definition word, and/or the organized content is displayed.

12. The claim structure organizing apparatus (1) of claim 9, wherein the organizing device (3) includes a subordinating marking component (33) which is ignited when the relationship definition is found with a subordinating definition word thereby obtaining an organized content of subordinating relationships among the element noun (EM), the object element noun and the complement which are defined after the subordinating definition word when the organization identifying word of "and" is obtained, and/or the organized content is displayed.
